# EUROPÄISCHE PATENTSCHRIFT

(11) **EP 1 205 991 B1**
(45) Veröffentlichungstag und Bekanntmachung des Hinweises auf die Patenterteilung: **21.06.2006**
(21) Anmeldenummer: 01124952.1
(22) Anmeldetag: 19.10.2001
(51) Int. Cl.: H01M 8/04, H01M 8/06

(54) **Verfahren zur elektrischen Inbetriebnahme einer Brennstoffzelle**
Process for setting a fuel cell into electrical operation
Procédé pour la mise en marche électrique d'une pile à combustible

(30) Priorität: 04.11.2000 DE 10054842
(43) Veröffentlichungstag der Anmeldung: 15.05.2002
(73) Patentinhaber: NuCellSys GmbH, 73230 Kirchheim/Teck-Nabern (DE)
(72) Erfinder: Boneberg, Stefan, 72660 Beuren (DE); Strohmaier, Manfred, 73275 Ohmden (DE); Theis, Erik, 73230 Kirchheim/Teck-Nabern (DE)
(74) Vertreter: Finkele, Rolf

(56) Entgegenhaltungen:
- EP-A- 1 122 805
- US-A- 4 473 622
- PATENT ABSTRACTS OF JAPAN Bd. 012, Nr. 261 (E-636), 22. Juli 1988 (1988-07-22) & JP 63 045766 A (FUJI ELECTRIC CO LTD), 26. Februar 1988 (1988-02-26)
- PATENT ABSTRACTS OF JAPAN Bd. 014, Nr. 413 (E-0974), 6. September 1990 (1990-09-06) & JP 02 158061 A (FUJI ELECTRIC CO LTD), 18. Juni 1990 (1990-06-18)
- PATENT ABSTRACTS OF JAPAN Bd. 010, Nr. 263 (E-435), 9. September 1986 (1986-09-09) & JP 61 088460 A (FUJI ELECTRIC CO LTD), 6. Mai 1986 (1986-05-06)

## Beschreibung

Die Erfindung betrifft ein Verfahren zur elektrischen Inbetriebnahme einer Brennstoffzelle in einer Brennstoffzellenanlage nach der im Oberbegriff von Anspruch 1 näher definierten Art.

Aus dem Stand der Technik ist es allgemein bekannt, daß die elektrische Inbetriebnahme einer Brennstoffzelle in einer Brennstoffzellenanlage mit einem Gaserzeugungssystem zum Vermeiden einer Schädigung der Brennstoffzelle, insbesondere der Membranen bei einer PEM-Brennstoffzelle, erst erfolgen darf, wenn ein ausreichend großer Gasstrom des aus dem Gaserzeugungssystem stammenden wasserstoffhaltigen Gases mit einer ausreichend hohen Konzentration an Wasserstoff in der Brennstoffzelle vorhanden ist.

In einer sehr einfachen Lösung dieses Problems wird daher ein gewisser Zeitraum nach dem Start des Gaserzeugungssystems abgewartet, ehe die Brennstoffzelle zu ihrer elektrischen Inbetriebnahme freigegeben wird. Dabei verläßt man sich auf Erfahrungswerte, welche besagen, daß nach der abgewarteten Zeit aller Voraussicht nach ein Gasstrom ausreichender Qualität und Menge im Bereich des Anodenraums der Brennstoffzelle vorhanden ist.

Um nun den Startvorgang einer solchen Brennstoffzellenanlage zeitlich zu optimieren und das Vorhandensein einer ausreichenden Menge und einer ausreichenden Qualität an wasserstoffhaltigem Gas zu objektivieren, schlägt die JP 630 45 766 A1 einen Temperatur-Detektor vor, welcher im Bereich eines Reformers des Gaserzeugungssystems angeordnet ist. Hat der Reformer des Gaserzeugungssystems eine vorbestimmte Temperatur erreicht, so wird davon ausgegangen, daß der Reformer korrekt arbeitet und die entsprechende Menge an wasserstoffhaltigem Gas in dem Gaserzeugungssystem zur Verfügung gestellt werden kann.

Eine ähnliche Vorgehensweise schlägt auch die JP 021 58 061 A1 vor.

Beiden japanischen Schriften ist es dabei gemeinsam, daß die Brennstoffzelle bzw. der Anodenraum der Brennstoffzelle eine Bypassleitung aufweist, so daß das aus dem Gaserzeugungssystem stammende Gas, das sogenannte Reformat, erst durch die Brennstoffzelle geleitet wird, wenn deren elektrische Zuschaltung unmittelbar bevorsteht.

Beide oben genannte Schriften weisen dabei den gravierenden Nachteil auf, daß über die Temperatur im Bereich des Gaserzeugungssystems lediglich dessen Zustand ermittelt werden kann, von dem dann entsprechende Rückschlüsse auf dessen korrekte Arbeitsfähigkeit gezogen werden. Die Qualität und die Menge des Wasserstoffs in dem Reformat selbst kann bei den oben genannten Verfahren in besonders nachteiliger Weise jedoch nicht festgestellt werden.

Es ist daher die Aufgabe der Erfindung, ein Verfahren zur elektrischen Inbetriebnahme einer Brennstoffzelle in einer Brennstoffzellenanlage mit einem Gaserzeugungssystem zu schaffen, welches sicherstellt, daß bei der Inbetriebnahme der Brennstoffzelle eine ausreichende Menge an wasserstoffhaltigem Gas mit einer ausreichenden Wasserstoffkonzentration zum Betrieb der Brennstoffzelle zur Verfügung steht.

Erfindungsgemäß wird diese Erfindung durch die im kennzeichnenden Teil von Anspruch 1 genannten Merkmale gelöst.

Der besondere Vorteil liegt in dem vergleichsweise einfachen Aufbau, welcher lediglich einen Temperatursensor im Bereich einer Verbrennung der beiden Gasströme nach der Brennstoffzelle erforderlich macht.

Ein weiterer entscheidender Vorteil liegt darin, daß die Verbrennung erst nach der Brennstoffzelle erfolgt, so daß über den Temperaturverlauf sichergestellt werden kann, daß die entsprechende, geförderte Menge und Qualität an wasserstoffhaltigem Gas in der Brennstoffzelle vorliegt und nicht, wie beim Stand der Technik, aller Voraussicht nach in dem Gaserzeugungssystem erzeugt werden müßte.

Das mit einfachen und robusten Bauteilen auskommende, platzsparende Verfahren weist darüber hinaus den Vorteil einer sehr hohen Betriebssicherheit auf und stellt damit eine entsprechend lange Lebensdauer sicher, ohne daß hierfür eine komplexe Sensorik erforderlich wäre.

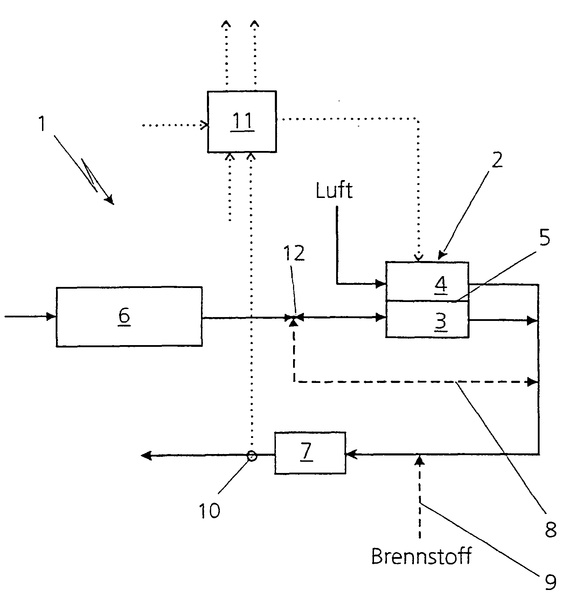

Weitere vorteilhafte Ausgestaltungen der Erfindung ergeben sich aus den Unteransprüchen und den anhand der Zeichnung nachfolgend beschriebenen Ausführungsbeispielen.

Die einzige beigefügte Figur zeigt eine Brennstoffzellenanlage mit einem prinzipmäßig angedeuteten Gaserzeugungssystem.

Den Kern einer Brennstoffzellenanlage 1 gemäß der einzigen beigefügten Figur bildet dabei eine Brennstoffzelle 2 mit einem Anodenraum 3, einem Kathodenraum 4 und einer den Anodenraum 3 von dem Kathodenraum 4 trennenden Membran 5. Zur Versorgung der Brennstoffzelle 2 mit einem wasserstoffhaltigen Gasstrom, dem sogenannten Reformatstrom, dient ein an sich bekanntes Gaserzeugungssystem 6, in welchem das Reformat beispielsweise aus flüssigen Kohlenwasserstoffen erzeugt wird. Dieser Reformatstrom durchströmt dann den Anodenraum 3 der Brennstoffzelle 2 und gelangt in Strömungsrichtung nach der Brennstoffzelle in den Bereich eines katalytischen Brenners 7. Außerdem wird Luft durch den Kathodenraum 4 der Brennstoffzelle gefördert, wobei der Gasstrom der Luft oder eines anderen sauerstoffhaltigen Gases nach der Brennstoffzelle 2 mit dem durch den Anodenraum 3 strömenden Gasstrom vermischt wird, so daß die Gasströme zusammen zu dem katalytischen Brenner 7 gelangen.

Prinzipiell ist es dabei natürlich auch denkbar, die beiden Gasströme erst im Bereich des katalytischen Brenners 7 zu mischen

Die Brennstoffzellenanlage 1 kann außerdem eine Bypassleitung 8 zu dem Anodenraum 3 der Brennstoffzelle 2 aufweisen, auf deren Funktion später noch näher eingegangen wird. Die Bypassleitung 8 ist dabei gestrichelt dargestellt, da ihr Vorhandensein lediglich eine Option dargestellt und die Bypassleitung 8 nur bei entsprechenden Randbedingungen in der Brennstoffzellenanlage 1 überhaupt benötigt wird.

Ebenso weist die Brennstoffzellenanlage 1 eine optionale Zuleitung 9 für einen zusätzlichen Brennstoff, beispielsweise Methanol oder Wasserstoff, in wenigstens einen der Gasströme in Strömungsrichtung zwischen der Brennstoffzelle 2 und dem katalytischen Brenner 7 auf. Über die Zuleitung 9 kann der zusätzliche Brennstoff in den Bereich des katalytischen Brenners 7 dosiert werden, falls dies erforderlich ist. Ein entsprechender Anwendungsfall könnte beispielsweise beim Start des Gaserzeugungssystems 6 auftreten, welches in einer weiteren Option zumindest teilweise durch den katalytischen Brenner 7 mit thermischer Energie versorgt werden könnte. Dann wäre es günstig, beim Start des Gaserzeugungssystems 6 die Luftzufuhr durch den Kathodenraum 4 der Brennstoffzelle 2 zu starten und über die Zugabe von zusätzlichem Brennstoff durch die Zuleitung 9 in dem katalytischen Brenner 7 eine entsprechende Wärme zu erzeugen, welche dann als die benötigte thermische Energie zum Start des Gaserzeugungssystems 6 Verwendung finden könnte.

Darüber hinaus ist in der Brennstoffzellenanlage 1 ein Temperatursensor 10 dargestellt, welcher den Temperaturverlauf in oder im Bereich der Abgase nach dem katalytischen Brenner 7 erfaßt. Die von dem Temperatursensor 10 erfaßten Daten werden einer entsprechenden Steuerungs- bzw. Regelungseinrichtung 11 zugeführt, welche unter anderem die elektrische Inbetriebnahme der Brennstoffzelle 2 steuert bzw. regelt. Auf das an sich bekannte elektrische Zuschalten der Brennstoffzelle 2 in einen entsprechenden Stromkreis mit wenigstens einem elektrischen Stromverbraucher soll hier nicht näher eingegangen werden, da dies an sich bekannt ist. Ebenso wurde auf die Darstellung von entsprechenden elektrischen Anschlüssen oder dergleichen im Bereich der prinzipmäßig angedeuteten Brennstoffzelle 2 verzichtet.

In einer ersten und einfachsten Variante des Verfahrens wird der katalytische Brenner 7 über Luft, welche durch den Kathodenraum 4 in der Brennstoffzelle 2 gefördert wird und den über die Zuleitung 9 eingebrachten zusätzlichen Brennstoff aufgeheizt, um die erforderliche thermische Energie zum Start des Gaserzeugungssystems zur Verfügung zu stellen.

Das Gaserzeugungssystem 6 wird dann ein entsprechendes Reformat liefern, welches zu Beginn keine oder nur eine sehr geringe Menge an Wasserstoff enthalten wird. Dafür ist das Reformat in dieser Phase sehr reich an entsprechenden Zusatzstoffen, wie Stickstoff, Kohlendioxid, Kohlenmonoxid, Wasser und Resten des flüssigen Kohlenwasserstoffs, welcher in dem Gaserzeugungssystem 6 umgesetzt wird. Dieser entsprechende für den Betrieb der Brennstoffzelle 2 noch nicht geeignete Reformatstrom wird dann entweder durch den Anodenraum 3 der Brennstoffzelle 2 oder, falls hier eine entsprechende chemische Reaktion zwischen Stoffen in dem Reformatstrom und Elementen der Brennstoffzelle 2, insbesondere der Membran 5 zu befürchten wäre, durch die Bypassleitung bzw. den Bypass 8 an der Brennstoffzelle 2 vorbei, zu dem katalytischen Brenner 7 geleitet und kommt dort zusammen mit der Luft, welche den Kathodenraum 4 der Brennstoffzelle 2 durchströmt, an.

Je nach Zusammensetzung des Reformatstroms wird dieser die Verbrennung in dem katalytischen Brenner 7 in dieser Phase nicht oder nur sehr gering beeinflussen. Stellt das Gaserzeugungssystem 6 nun jedoch eine ausreichend große Menge an Reformat mit einer ausreichend großen Konzentration an Wasserstoff zur Verfügung, wird dieser entsprechend der oben beschriebenen Strömungswege ebenfalls zu dem katalytischen Brenner 7 gelangen. Die Temperatur im Bereich des katalytischen Brenners 7 und/oder unmittelbar nach dem katalytischen Brenner, welche durch den Temperatursensor 10 erfaßt wird, wird in diesem Falle entsprechend ansteigen. Überschreitet die Temperatur im Bereich des Temperatursensors 10 einen bestimmten vorgegebenen Wert, welcher wiederum von Randbedingungen, beispielsweise Kaltstart oder Warmstart des Gaserzeugungssystems 6 oder dergleichen, abhängt, so ist die in dem Reformatstrom vorliegende Menge an Wasserstoff ausreichend um einen reibungslosen Betrieb der Brennstoffzelle 2 zu garantieren und diese kann in Betrieb genommen werden.

Wurde nun die entsprechende Variante über die Bypassleitung 8 gewählt, so muß unmittelbar vor der Inbetriebnahme der Brennstoffzelle 2 über ein entsprechendes Ventil 12 sichergestellt werden, daß zumindest ein Teil des Reformatstroms, im besten Falle ein während der Inbetriebnahme ständig ansteigender Teil des Reformatstroms, in den Bereich des Anodenraums 3 der Brennstoffzelle 2 gelangt.

Wird dagegen die einfache und platzsparende Variante ohne die Bypassleitung 9 gewählt, so reicht es aus, über die Steuerungs- bzw. Regelungseinrichtung 11 das Zuschalten der Brennstoffzelle 2 in einen entsprechenden Stromkreis, also deren elektrische Inbetriebnahme, einzuleiten.

Prinzipiell ließe sich das oben beschriebene Verfahren selbstverständlich auch mit einem Flammbrenner oder dergleichen realisieren, die Erfahrung in dem Bereich der Gaserzeugungssysteme 6 hat jedoch gezeigt, daß für derartigen Anwendungen, insbesondere auch zur Bereitstellung von thermischer Energie für das Gaserzeugungssystem 6, ein katalytischer Brenner 7 besonders gut geeignet ist.

Parallel zu diesem oben beschriebenen sehr einfachen Verfahren, bei welchem über eine Temperaturerhöhung in dem katalytischen Brenner 7 in Strömungsrichtung nach der Brennstoffzelle 2 das Vorhandensein einer ausreichenden Menge an wasserstoffhaltigem Gas in dem Reformatstrom sichergestellt wird, kann die Brennstoffzellenanlage 1 auch in der Art betrieben werden, daß im Bereich des Temperatursensors 10 eine wenigstens annähernd konstante Temperatur bei einer vollständigen Reduzierung des zugeführten Brennstoffs in dem Bereich des katalytischen Brenners 7 sichergestellt wird. Dann würde, sobald eine ausreichende Menge an Brennstoff bzw. Wasserstoff über den Reformatstrom an den katalytischen Brenner 7 gelangt, die Menge an über die Zuleitung 9 zusätzlich zugeführten Brennstoff entsprechend reduziert werden müssen, um die Temperatur im Bereich des Temperatursensors 10 konstant zu halten. In diesem Fall könnte man bei einem konstanten Temperaturverlauf indirekt die zudosierte Menge an Brennstoff im Bereich der Zuleitung 9 als Indikator dafür nehmen, daß eine ausreichende Menge an Wasserstoff in dem Reformatstrom vorliegt. Über die Steuerungs- bzw. Regelungseinrichtung 11 kann dann wiederum die elektrische Inbetriebnahme der Brennstoffzelle 2, und auch hier gegebenenfalls wieder das Abschalten der Bypassleitung 8, veranlaßt werden.

Um dabei eine Überhitzung des katalytischen Brenners 7 zu vermeiden, kann es gegebenenfalls vorteilhaft sein, die Temperatur, nachdem der katalytische Brenner 7 zur Aufheizung des Gaserzeugungssystems 6 in einer Aufheizphase, bevor ein ausreichend wasserstoffhaltiger Reformatstrom erzeugt wird, genutzt worden ist, entsprechend abzusenken, um zu vermeiden, daß beim Eintreffen eines wasserstoffhaltigen Reformatstroms die Temperatur in dem katalytischen Brenner 7 weiter ansteigt und so gegebenenfalls die katalytischen Stoffe schädigen könnte. Dieses Absenken der Temperatur kann dabei entweder über eine Reduzierung des über die Zuleitung 9 zusätzlich zudosierten Brennstoffs oder über eine Erhöhung der über den Kathodenraum 4 der Brennstoffzelle 2 in den katalytischen Brenner 7 dosierten Luft sehr einfach erfolgen.

Dadurch ergibt sich die Möglichkeit, am Anfang zur Aufheizung des Gaserzeugungssystem 6 mit einer sehr hohen Dosierung an Brennstoff zu arbeiten, so daß das Gaserzeugungssystem sehr schnell hochgeheizt werden kann. Durch die danach erfolgende Absenkung der Temperatur im Bereich des katalytischen Brenners 7 wird erreicht, daß dieser eine weitere Temperaturerhöhung aufgrund des in dem Reformatstrom vorliegenden Wasserstoffs erfahren kann, ohne daß es zu einer Schädigung des Katalysators oder dergleichen kommt.

Besondere Umstände bei der Inbetriebnahme der Brennstoffzelle 2 in dem Brennstoffzellensystem 1 liegen vor, wenn es sich um einen Typ der Brennstoffzelle 2 handelt, welcher nicht bei Umgebungsdruck gestartet werden kann, sondern welcher zu seinem Start und zu seinem Betrieb ein gegenüber dem Umgebungsdruck erhöhtes Druckniveau benötigt.

Hier müßte dann entsprechend die elektrische Inbetriebnahme der Brennstoffzelle 2 anhand des Temperaturverlaufs im Bereich des katalytischen Brenners 7 in zwei Stufen erfolgen. Zuerst kommt es zu der eingangs beschriebenen Temperaturerhöhung im Bereich des katalytischen Brenners 7. Diese müßte dann durch die Steuerungs- bzw. Regelungseinrichtung 11 ein Signal an ein hier nicht dargestelltes Reformatdruckventil geben, welches den Reformatstrom entsprechend drosselt, um in dem Gaserzeugungssystem 6 das gegenüber dem Umgebungsdruck erhöhte Druckniveau zu erreichen. Durch den gedrosselten Reformatstrom und damit auch die gedrosselte Zufuhr von wasserstoffhaltigem Gas in den Bereich des katalytischen Brenners 7 wird die Temperatur am Temperatursensor 10 während des Druckaufbaus in dem Gaserzeugungssystem 6 entsprechend absinken. Wenn die Druckerhöhung in dem Gaserzeugungssystem 6 abgeschlossen ist und der Reformatstrom wieder mit seinem vollen Volumenstrom durch die Brennstoffzelle 2 und damit auch zu dem katalytischen Brenner 7 strömt, kommt es zu einer zweiten Temperaturerhöhung im Bereich des Temperatursensors 10. Diese zweite Temperaturerhöhung in dem Temperaturverlauf stellt dann den Indikator dafür dar, daß der gesamte Anodenraum 3 der Brennstoffzelle 2 mit einem Reformat ausreichender Qualität gefüllt ist und die Brennstoffzelle 2 nun elektrisch in Betrieb genommen werden darf.

Auch hier könnte - je nach dem, wie hier die Brennstoffzellenanlage 1 ausgeführt ist - nach Erfüllung der oben genannten Zuschaltbedingungen entweder die Bypassleitung 8 um die Anodenkammer 3 geschlossen und/oder, wenn das Reformat direkt durch die Anodenkammer 3 geleitet worden ist, lediglich die Zuschaltung der Brennstoffzelle 2 in den Stromkreis mit dem wenigstens einen elektrischen Verbraucher durch die Steuerungs- und Regelungseinrichtung 11 freigegeben werden.

Nach dem erfolgreichen elektrischen Inbetriebnehmen der Brennstoffzelle 2 kann dann der gewünschte elektrische Strom in der vorgegebenen Art angefordert werden.

Zur Reduzierung der für die Inbetriebnahme der Brennstoffzellenanlage 1 benötigten Zeit ist es weiterhin möglich, zusätzlich die Temperatur im Gaserzeugungssystem 6 zu überwachen und außerdem die dem Gaserzeugungssystem 6 zugeführte Brennstoffmenge mit zunehmender Temperatur im Gaserzeugungssystem 6 zu erhöhen. Da der Brennstoffumsatz im Gaserzeugungssystem 6 von der momentanen Temperatur abhängt kann durch diese Vorgehensweise jeweils die maximale Brennstoffmenge zugeführt und somit die Zeit bis zur Inbetriebnahme der Brennstoffzelle 2 reduziert werden.

Der bevorzugte Anwendungszweck des beschriebenen Aufbaus ist dabei sicherlich beim Einsatz der Brennstoffzellenanlage 1 in einem Kraftfahrzeug zu sehen.

## Patentansprüche

1. Verfahren zur elektrischen Inbetriebnahme einer Brennstoffzelle in einer Brennstoffzellenanlage, insbesondere für den Einsatz in einem Kraftfahrzeug, mit einem einen wasserstoffhaltigen Gasstrom erzeugenden Gaserzeugungssystem, wobei der Gasstrom aus dem Gaserzeugungssystem und ein sauerstoffhaltiger Gasstrom nach der Brennstoffzelle zusammengeführt und verbrannt werden,
**dadurch gekennzeichnet, daß**
die elektrischen Inbetriebnahme der Brennstoffzelle (2) in Abhängigkeit eines im Bereich der Verbrennung der Gasströme vorliegenden Temperaturverlaufs (Temperatursensor 10) erfolgt.

2. Verfahren nach Anspruch 1,
**dadurch gekennzeichnet, daß**
die Gasströme katalytisch (katalytischer Brenner 7) verbrannt werden.

3. Verfahren nach Anspruch 1 oder 2,
**dadurch gekennzeichnet, daß**
die Gasströme unter Zufuhr eines weiteren Brennstoffs (Zuleitung 9) verbrannt werden.

4. Verfahren nach Anspruch 1, 2 oder 3,
**dadurch gekennzeichnet, daß**
die elektrische Inbetriebnahme der Brennstoffzelle (2) durch elektrisches Zuschalten der Brennstoffzelle (2) in einem Stromkreis mit wenigstens einem Stromverbraucher erfolgt.

5. Verfahren nach einem der Ansprüche 1 bis 4,
**dadurch gekennzeichnet, daß**
der sauerstoffhaltige Gasstrom durch einen Kathodenraum (4) der Brennstoffzelle (2) geleitet wird, und daß der Gasstrom aus dem Gaserzeugungssystem (6) bereits vor der elektrischen Inbetriebnahme der Brennstoffzelle (2) durch einen Anodenraum (3) der Brennstoffzelle (2) geleitet wird.

6. Verfahren nach einem der Ansprüche 1 bis 4,
**dadurch gekennzeichnet, daß**
der sauerstoffhaltige Gasstrom durch einen Kathodenraum (4) der Brennstoffzelle (2) geleitet wird, und daß der Gasstrom aus dem Gaserzeugungssystem (6) vor der Inbetriebnahme der Brennstoffzelle (2) über eine Bypassleitung (8) an der Brennstoffzelle (2) vorbeigeleitet wird, wobei zur elektrischen Inbetriebnahme zumindest ein Teil des aus den Gaserzeugungssystem (6) stammenden Gasstroms in einen Anodenraum (3) der Brennstoffzelle (2) geleitet wird.

7. Verfahren nach einem der Ansprüche 1 bis 6,
**dadurch gekennzeichnet, daß**
die Inbetriebnahme der Brennstoffzelle (2) bei Umgebungsdruck erfolgt.

8. Verfahren nach einem der Ansprüche 1 bis 7,
**dadurch gekennzeichnet, daß**
die elektrische Inbetriebnahme der Brennstoffzelle (2) erfolgt, sobald die Temperatur (Sensor 10) der Verbrennung einen bestimmten, vorgegebenen Wert erreicht.

9. Verfahren nach einem der Ansprüche 3 bis 7,
**dadurch gekennzeichnet, daß**
die elektrische Inbetriebnahme der Brennstoffzelle (2) erfolgt, sobald die zugeführte Menge an Brennstoff bei vollständiger Verbrennung und konstantem Temperaturverlauf einen vorgegebenen Wert erreicht.

10. Verfahren nach einem der Ansprüche 1 bis 6,
**dadurch gekennzeichnet, daß**
die elektrische Inbetriebnahme der Brennstoffzelle (2) bei einem gegenüber dem Umgebungsdruck erhöhten Druckniveau erfolgt.

11. Verfahren nach Anspruch 10,
**dadurch gekennzeichnet, daß**
die elektrische Inbetriebnahme der Brennstoffzelle (2) erfolgt, wenn der Temperaturverlauf nach einem ersten Abfallen der Temperatur wegen einer Drosselung des aus dem Gaserzeugungssystem (6) stammenden Gasstroms zwecks Aufbau des erhöhten Druckniveaus erneut ansteigt, und einen vorgegebenen Wert erreicht.

12. Verfahren nach Anspruch 1,
**dadurch gekennzeichnet, daß**
zusätzlich die Temperatur im Gaserzeugungssystem (6) überwacht wird und daß die dem Gaserzeugungssystem (6) zugeführte Brennstoffmenge mit zunehmender Temperatur erhöht wird.

## Claims

1. Method for the initial electrical operation of a fuel cell in a fuel cell system, in particular for use in a motor vehicle, having a gas generation system which generates a hydrogen-containing gas stream, the gas stream from the gas generation system and an oxygen-containing gas stream being combined and burnt downstream of the fuel cell, **characterized in that** the initial electrical operation of the fuel cell (2) takes place as a function of a temperature profile (temperature sensor 10) which is present in the region of the combustion of the gas streams.

2. Method according to Claim 1, **characterized in that** the gas streams are catalytically burnt (catalytic burner 7).

3. Method according to Claim 1 or 2, **characterized in that** the gas streams are burnt with a further fuel being supplied (feed line 9).

4. Method according to Claim 1, 2 or 3, **characterized in that** the initial electrical operation of the fuel cell (2) is effected by electrically connecting the fuel cell (2) into a circuit with at least one power consumer.

5. Method according to one of Claims 1 to 4, **characterized in that** the oxygen-containing gas stream is passed through a cathode space (4) of the fuel cell (2), and **in that** the gas stream from the gas generation system (6) is passed through an anode space (3) of the fuel cell (2) even prior to the initial electrical operation of the fuel cell (2).

6. Method according to one of Claims 1 to 4, **characterized in that** the oxygen-containing gas stream is passed through a cathode space (4) of the fuel cell (2), and **in that** the gas stream from the gas generation system (6), prior to the initial operation of the fuel cell (2), is made to bypass the fuel cell (2) via a bypass line (8), and for the initial electrical operation at least some of the gas stream originating from the gas generation system (6) is passed into an anode space (3) of the fuel cell (2).

7. Method according to one of Claims 1 to 6, **characterized in that** the initial operation of the fuel cell (2) takes place at ambient pressure.

8. Method according to one of Claims 1 to 7, **characterized in that** the initial electrical operation of the fuel cell (2) takes place as soon as the temperature (sensor 10) of the combustion reaches a specific, predetermined value.

9. Method according to one of Claims 3 to 7, **characterized in that** the initial electrical operation of the fuel cell (2) takes place as soon as the quantity of fuel supplied reaches a predetermined value with complete combustion and a constant temperature profile.

10. Method according to one of Claims 1 to 6, **characterized in that** the initial electrical operation of the fuel cell (2) takes place at a pressure level which is higher than ambient pressure.

11. Method according to Claim 10, **characterized in that** the initial electrical operation of the fuel cell (2) takes place when the temperature profile, after an initial drop in the temperature caused by a throttling of the gas stream originating from the gas generation system (6), rises again for the purpose of building up the increased pressure level and reaches a predetermined value.

12. Method according to Claim 1, **characterized in that** the temperature in the gas generation system (6) is additionally monitored, and **in that** the quantity of fuel supplied to the gas generation system (6) is increased as the temperature rises.

## Revendications

1. Procédé pour la mise en service électrique d'une pile à combustible dans une installation de piles à combustible, notamment pour l'utilisation dans un véhicule automobile, comprenant un système générateur de gaz produisant un courant de gaz contenant de l'hydrogène, le courant de gaz provenant du système générateur de gaz et un courant de gaz contenant de l'oxygène étant regroupés après la pile à combustible puis brûlés, **caractérisé en ce que** la mise en service électrique de la pile à combustible (2) est effectuée en fonction d'une courbe de température (capteur de température 10) présente dans la zone de la combustion des courants de gaz.

2. Procédé selon la revendication 1, **caractérisé en ce que** les courants de gaz sont brûlés de manière catalytique (brûleur catalytique 7).

3. Procédé selon la revendication 1 ou 2, **caractérisé en ce que** le courants de gaz sont brûlés en acheminant un combustible supplémentaire (conduite d'arrivée 9).

4. Procédé selon la revendication 1, 2 ou 3, **caractérisé en ce que** la mise en service électrique de la pile à combustible (2) est réalisée par le branchement de la pile à combustible (2) dans un circuit comprenant au moins un consommateur électrique.

5. Procédé selon l'une des revendications 1 à 4, **caractérisé en ce que** le courant de gaz contenant de l'oxygène est acheminé à travers un espace cathodique (4) de la pile à combustible (2) et que le courant de gaz en provenance du système générateur de gaz (6) est acheminé à travers un espace anodique (3) de la pile à combustible (2) déjà avant la mise en service électrique de la pile à combustible (2).

6. Procédé selon l'une des revendications 1 à 4, **caractérisé en ce que** le courant de gaz contenant de l'oxygène est acheminé à travers un espace cathodique (4) de la pile à combustible (2) et que le courant de gaz en provenance du système générateur de gaz (6) est préacheminé à la pile à combustible (2) par le biais d'une conduite de bipasse (8) avant la mise en service de la pile à combustible (2), au moins une partie du courant de gaz en provenance du système générateur de gaz (6) étant acheminé dans un espace anodique (3) de la pile à combustible (2) pour réaliser la mise en service électrique.

7. Procédé selon l'une des revendications 1 à 6, **caractérisé en ce que** la mise en service électrique de la pile à combustible (2) s'effectue à la pression ambiante.

8. Procédé selon l'une des revendications 1 à 7, **caractérisé en ce que** la mise en service électrique de la pile à combustible (2) s'effectue dès que la température (capteur 10) de la combustion atteint une valeur prédéfinie donnée.

9. Procédé selon l'une des revendications 3 à 7, **caractérisé en ce que** la mise en service électrique de la pile à combustible (2) s'effectue dès que la quantité de combustible acheminée atteint une valeur prédéfinie en présence d'une combustion complète et d'une courbe de température constante.

10. Procédé selon l'une des revendications 1 à 6, **caractérisé en ce que** la mise en service électrique de la pile à combustible (2) s'effectue à un niveau de pression accru par rapport à la pression ambiante.

11. Procédé selon la revendication 10, **caractérisé en ce que** la mise en service électrique de la pile à combustible (2) s'effectue lorsque la courbe de température, après une première chute de la température en raison d'un étranglement du courant de gaz en provenance du système générateur de gaz (6), augmente de nouveau en vue d'établir le niveau de pression accru et atteint une valeur prédéfinie.

12. Procédé selon la revendication 1, **caractérisé en ce que** la température dans le système générateur de gaz (6) est elle aussi surveillée et que la quantité de combustible acheminée au système générateur de gaz (6) est augmentée à mesure que la température croît.
